# EUROPÄISCHE PATENTSCHRIFT

(11) **EP 4 028 196 B1**
(45) Veröffentlichungstag und Bekanntmachung des Hinweises auf die Patenterteilung: **20.08.2025**
(21) Anmeldenummer: 20793259.1
(22) Anmeldetag: 08.09.2020
(51) Int. Cl.: B23K 20/00, B23K 20/10, B23K 101/38, B23K 103/10, B23K 103/12

(54) **VERFAHREN ZUR HERSTELLUNG EINER ELEKTRISCH LEITENDEN VERBINDUNG**
METHOD OF MANUFACTURING AN ELECTRICALLY CONDUCTIVE CONNECTION
PROCEDE DE FABRICATION D'UNE CONNEXION ELECTRIQUE CONDUCTIVE

(30) Priorität: 11.09.2019 DE 102019124333
(43) Veröffentlichungstag der Anmeldung: 20.07.2022
(73) Patentinhaber: Hesse GmbH, 33104 Paderborn (DE)
(72) Erfinder: UNGER, Andreas, 33415 Verl (DE); BRÖKELMANN, Michael, 33129 Delbrück (DE); HUNSTIG, Matthias, 33104 Paderborn (DE); HESSE, Hans-Jürgen, 33106 Paderborn (DE)
(74) Vertreter: Wickord, Wiro
(86) Internationale Anmeldenummer: PCT/DE2020/100783
(87) Internationale Veröffentlichungsnummer: WO 2021/047733

(56) Entgegenhaltungen:
- EP-A2- 0 367 705
- EP-B1- 0 406 351
- JP-A- 2002 118 152
- US-A- 4 970 365
- US-A1- 2005 176 178

## Beschreibung

Die Erfindung betrifft ein Verfahren zum laserunterstützten Ultraschallbonden.

Aus der nachveröffentlichten deutschen Patentanmeldung 10 2018 121 696.3 der Anmelderin ist bekannt, beim Ultraschallbonden mittels eines Laserstrahls eine Spitze eines Bondwerkzeugs zu erwärmen. Es sind dabei verschiedene Verfahrenskonzepte in Bezug auf den Betrieb eines den Laserstrahl bereitstellenden Lasergenerators offenbart. Insbesondere in einem gesteuerten Betrieb sind die offenbarten Verfahrenskonzepte vorteilhaft.

Aus der EP 0 367 705 A2, offenbarend den Oberbegriff des Anspruchs 1, ist eine Bondvorrichtung für das laserunterstützte Ultraschallbonden bekannt. Der Laserstrahl wird hierbei über einen Lichtwellenleiter geführt, welcher sich abschnittsweise im Inneren des Bondwerkzeugs befindet und dieses im Bereich der Spitze des Bondwerkzeugs von innen erwärmt.

Die US 2005/176178 A1 beschreibt eine Bondvorrichtung, bei der ein angehobenes Bondwerkzeug in seiner oberen Position mittels eines Laserstrahls erwärmt wird. Das erwärmte Bondwerkzeug wird dann verwendet, um zwei Verbindungspartner stoffschlüssig und unter Bereitstellung von Ultraschallenergie miteinander zu verbinden.

Aus der JP 2002 118152 A ist eine Ultraschall-Bondvorrichtung mit einem Bondkopf bekannt, der ein Bondwerkzeug aufweist. Das Bondwerkzeug wird berührungslos erwärmt. Eine Temperatur des Bondwerkzeugs wird ebenfalls berührungslos bestimmt.

Aufgabe der vorliegenden Erfindung ist es, ein weitergebildetes Verfahren zur laserunterstützen Herstellung einer Bondverbindung anzugeben, bei dem eine Temperatur der Werkzeugspitze bedarfsgerecht vorgegeben, überwacht und/oder eingestellt werden kann.

Zur Lösung der Aufgabe weist die Erfindung die Merkmale des Patentanspruchs 1 auf. Demzufolge umfasst das Verfahren zur Herstellung einer elektrisch leitenden Verbindung zwischen einer Kontaktfläche eines Funktionsbauteils und einem Verbindungsbauteil die folgenden Verfahrensschritte:
- das Verbindungsbauteil wird an eine Spitze des Bondwerkzeugs angelegt und von dem Bondwerkzeug mit einer Normalkraft gegen die Kontaktfläche des Funktionsbauteils angedrückt;
- das Bondwerkzeug und das daran angelegte Verbindungsbauteil werden zu Ultraschallschwingungen angeregt;
- ein Lasergenerator wird aktiviert und von dem Lasergenerator wird ein Laserstrahl bereitgestellt;
- der Laserstrahl wird auf die Spitze des Bondwerkzeugs gerichtet und erwärmt die Spitze des Bondwerkzeugs;
- eine Ist-Temperatur der Spitze des Bondwerkzeugs wird berührungslos gemessen;
- der Lasergenerator wird intermittierend und/oder mit einer einstellbaren Laserleistung so betrieben, dass sich an der Spitze des Bondwerkzeugs eine vorgegebene Soll-Temperatur einstellt.

Insbesondere kann dabei vorgesehen sein, dass der Lasergenerator geregelt betrieben wird und dass die messtechnisch erfasste Ist-Temperatur der Werkzeugspitze auf die Soll-Temperatur angepasst beziehungsweise eingestellt wird.

Der besondere Vorteil der Erfindung besteht darin, dass die Ist-Temperatur unmittelbar an der Spitze des Bondwerkzeugs bestimmt und beeinflusst wird und dass damit mittelbar auch eine Temperatur des mit dem Funktionsbauteil zu verbindenden Verbindungsbauteils bedarfsgerecht gewählt und eingestellt werden kann. Es können hierbei variable beziehungsweise schwankende und weder messtechnisch noch modellbasiert exakt zu ermittelnde Prozessparameter ausgeglichen werden, welche die Ist-Temperatur der Werkzeugspitze mit beeinflussen und sich damit auf den Bondprozess auswirken. Beispielsweise kann die Ist-Temperatur durch die Oberflächenbeschaffenheit beziehungsweise das Absorptionsvermögen des Bondwerkzeugs bei der Erwärmung mit dem Laserstrahl sowie den Wärmefluss in Richtung eines Schafts des Bondwerkzeugs, des Ultraschallgenerators beziehungsweise -transducers und/oder anderer Funktionsbauteile des Bondautomaten beeinflusst werden. Weitere mögliche Einflussgrößen stellen darüber hinaus insbesondere der sich zeitvariabel am Bondwerkzeug einstellende Verschleiß, die Oberflächenbeschaffenheit der Kontaktfläche und des Verbindungsbauteils und/oder Abweichungen in Bezug auf die vorgegebene Normalkraft sowie die Amplituden und Frequenz der Ultraschallschwingung dar. Unabhängig vom zeitvariablen beziehungsweise unbekannten Einfluss dieser Störgrößen kann die Ist-Temperatur der Spitze des Bondwerkzeugs durch das erfindungsgemäße Herstellverfahren bestimmt und auf die Soll-Temperatur geregelt werden.

Die Ist-Temperatur und die Soll-Temperatur beim Bonden liegen dabei üblicherweise oberhalb der Umgebungstemperatur beziehungsweise der Ausgangstemperatur der Verbindungspartner (Funktionsbauteil und Verbindungsbauteil).

Grundsätzlich besteht demzufolge bei dem erfindungsgemäßen Verfahren die Möglichkeit, den Bondprozess zu beeinflussen über eine Änderung der Normalkraft, eine Anpassung der Ultraschallschwingungen sowie eine Anpassung beziehungsweise Änderung in Bezug auf die Temperatur. Während insbesondere die Normalkraft nur langsam angepasst beziehungsweise geändert werden kann, kann die Temperatur durch das Aktivieren beziehungsweise Deaktivieren des Lasergenerators und/oder die Anpassung der Laserleistung dynamisch geändert werden. Die ergänzende Bereitstellung der Laserleistung erweitert insofern die Möglichkeit, Einfluss auf den Prozess zu nehmen, zusätzlich Energie in die Verbindungsstelle einzubringen und/oder den Prozess an unterschiedliche Werkstoffe anzupassen. Grundsätzlich ist das erfindungsgemäße Verfahren dabei beispielsweise im Bereich des Drahtbondens und des Chipbondens anwendbar.

Indem mittels des Laserstrahls die Spitze des Bondwerkzeugs erwärmt wird, ist das erfindungsgemäße Herstellverfahren zudem sehr schonend. Eine direkte Erwärmung des Verbindungspartners unterbleibt mit der Folge, dass dem Risiko einer Beschädigung des Verbindungspartners entgegengewirkt ist. Beispielsweise reduziert sich das Risiko, dass beim Drahtbonden der Draht anschmilzt beziehungsweise seine Oberfläche beschädigt wird und die Ultraschallanregung erschwert wird. Beim Chipbonden reduziert die indirekte Erwärmung des Chips signifikant das Risiko einer Beschädigung des als Verbindungsbauteil am Werkzeug festgelegten Chips beziehungsweise seiner Funktionselemente und/oder Anschlusskontakte.

Nach der Erfindung wird der Lasergenerator aktiviert und der Laserstrahl bereitgestellt, bevor das Bondwerkzeug mit der Normalkraft beaufschlagt und das Verbindungsbauteil gegen die Kontaktfläche des Funktionsbauteils angedrückt wird beziehungsweise bevor das Bondwerkzeug zu Ultraschallschwingungen angeregt wird. Vorteilhaft kann hierdurch der Verbindungsprozess signifikant beschleunigt und die Zeit zur Herstellung einer Bondverbindung reduziert werden, da das Bondwerkzeug beim Aufsetzen bereits warm ist und weniger Ultraschallenergie zugeführt werden muss. Die reduzierten Prozesszeiten führen dann dazu, dass pro Zeiteinheit mehr Verbindungen hergestellt werden können. Zusätzlich kann der Verschleiß des Bondwerkzeugs reduziert werden, wenn der Ultraschall erst aktiviert ist, wenn die Verbindungspartner bereits erwärmt und dadurch weicher sind. Zudem kann erreicht werden, dass die thermischen Ausgangsbedingungen zum Zeitpunkt der Aufbringung der Normalkraft und/oder beim Aktivieren des Ultraschalls stets gleich sind mit der Folge, dass sich die Reproduzierbarkeit und die Beherrschbarkeit des Prozesses verbessern.

Das Bondwerkzeug ist an einem verfahrbaren Bondkopf montiert. Die Spitze des Bondwerkzeugs wird beim Positionieren des Bondkopfs über der Kontaktfläche des Funktionsbauteils erwärmt mit der Folge, dass die Zykluszeit insgesamt sinkt und die Verbindungen innerhalb kurzer Zeit besonders wirtschaftlich hergestellt werden können.

Nach einer Weiterbildung der Erfindung ist die Laserleistung des Lasergenerators so gewählt, dass die Bondwerkzeugspitze dauerhaft erwärmt ist, wobei die Ist-Temperatur an der Spitze des Bondwerkzeugs nach dem Herstellen einer ersten elektrisch leitenden Verbindung und vor dem Herstellen einer zweiten elektrisch leitenden Verbindung fortwährend oberhalb der Umgebungs- beziehungsweise Ausgangstemperatur liegt. Vorteilhaft können durch das dauerhafte Erwärmen der Spitze des Bondwerkzeugs die Prozesszeit weiter reduziert und der Durchsatz erhöht werden mit der Folge, dass eine Vielzahl elektrisch leitender Verbindungen besonders wirtschaftlich hergestellt werden kann. Da die Ist-Temperatur stets oberhalb der Umgebungs- beziehungsweise Ausgangstemperatur liegt, kann die mit Hilfe des Laserstrahls in die Verbindungsstelle eingebrachte Wärmeenergie beim Herstellen der zweiten und jeder weiteren Verbindung geringer sein als bei der Herstellung der ersten Verbindung.

Nach der Erfindung wird der Lasergenerator fortbetrieben, nachdem die Anregung des Bondwerkzeugs zu Ultraschallschwingungen beendet ist. Vorteilhaft kann hierdurch die Verbindungsqualität verbessert werden.

Nach einer Weiterbildung der Erfindung wird der Laserstrahl über einen Lichtwellenleiter aus dem Lasergenerator herausgeführt und zu der Spitze des Bondwerkzeugs geführt. Vorteilhaft kann hierbei der Lasergenerator ortsfest installiert sein, wohingegen der Laserstrahl über den Lichtwellenleiter zu dem mithin frei positionierbaren Bondwerkzeug geführt wird. Es gelingt hierdurch, die bewegten Massen gering zu halten und einen Bondautomaten bereitzustellen, der sich durch eine hohe Dynamik auszeichnet.

Nach einer Weiterbildung der Erfindung ist ein der Spitze des Bondwerkzeugs zugewandtes freies Ende des Lichtwellenleiters in einem Abstand zu dem Bondwerkzeug positioniert beziehungsweise gehalten. Vorteilhaft wird hierdurch zum einen erreicht, dass Ultraschallschwingungen des Bondwerkzeugs nicht auf den Lichtwellenleiter übertragen werden. Zum anderen wird durch die Beabstandung von Werkzeugspitze und freiem Ende des Lichtwellenleiters einer Verschmutzung des Lichtwellenleiters und damit eine Reduzierung der optischen Güte beziehungsweise des optischen Wirkungsgrads entgegengewirkt.

Nach einer Weiterbildung der Erfindung wird der Laserstrahl mantelseitig von außen auf das Bondwerkzeug geführt. Vorteilhaft kann hierdurch die Montage und Wartung des Bondautomaten sehr einfach erfolgen. Bei einem Werkzeugwechsel können Arbeiten am Lasergenerator beziehungsweise am Lichtwellenleiter vermieden werden mit der Folge, dass der Werkzeugwechsel schnell und mit wenig Aufwand erfolgen kann und Stillstandzeiten reduziert werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden. Die Zeichnungen dienen lediglich beispielhaft der Klarstellung der Erfindung. Sie haben keinen einschränkenden Charakter.

Es zeigen:
- Fig. 1: einen zeitlichen Verlauf der Prozessparameter Normalkraft, Ultraschallleistung und Ist-Temperatur einer Spitze eines Bondwerkzeugs bei einer ersten Variante des Betriebsverfahrens,
- Fig. 2: eine zeitliche Gegenüberstellung der Soll-Temperatur, einer an der Spitze des Bondwerkzeugs tatsächlich ermittelten Ist-Temperatur der Werkzeugspitze und einer Heizleistung,
- Fig. 3: den zeitlichen Verlauf der Prozessparameter Normalkraft, Ultraschallleistung und Ist-Temperatur der Spitze des Bondwerkzeugs bei einer zweiten Variante des Betriebsverfahrens,
- Fig. 4: den zeitlichen Verlauf der Prozessparameter Normalkraft, Ultraschallleistung und Ist-Temperatur der Spitze des Bondwerkzeugs bei einer dritten Variante des Betriebsverfahrens,
- Fig. 5: den zeitlichen Verlauf der Prozessparameter Normalkraft, Ultraschallleistung und Ist-Temperatur der Spitze des Bondwerkzeugs bei einer vierten Variante des Betriebsverfahrens,
- Fig. 6: den zeitlichen Verlauf der Prozessparameter Normalkraft, Ultraschallleistung und Ist-Temperatur der Spitze des Bondwerkzeugs bei einer fünften Variante des Betriebsverfahrens,
- Fig. 7: den zeitlichen Verlauf der Prozessparameter Normalkraft, Ultraschallleistung und Ist-Temperatur der Spitze des Bondwerkzeugs bei einer sechsten Variante des Betriebsverfahrens gemäß der Erfindung,
- Fig. 8: den zeitlichen Verlauf der Prozessparameter Normalkraft, Ultraschallleistung und Ist-Temperatur der Spitze des Bondwerkzeugs bei einer siebten Variante des Betriebsverfahrens gemäß der Erfindung,
- Fig. 9: den zeitlichen Verlauf der Prozessparameter Normalkraft, Ultraschallleistung und Ist-Temperatur der Spitze des Bondwerkzeugs bei einer achten Variante des Betriebsverfahrens gemäß der Erfindung,
- Fig. 10: den zeitlichen Verlauf der Prozessparameter Normalkraft, Ultraschallleistung und Ist-Temperatur der Spitze des Bondwerkzeugs bei einer neunten Variante des Betriebsverfahrens,
- Fig. 11: den zeitlichen Verlauf der Prozessparameter Normalkraft, Ultraschallleistung und Ist-Temperatur der Spitze des Bondwerkzeugs bei einer zehnten Variante des Betriebsverfahrens,
- Fig. 12: den zeitlichen Verlauf der Prozessparameter Normalkraft, Ultraschallleistung und Ist-Temperatur der Spitze des Bondwerkzeugs bei einer elften Variante des Betriebsverfahrens,
- Fig. 13: den zeitlichen Verlauf der Prozessparameter Normalkraft, Ultraschallleistung und Ist-Temperatur der Spitze des Bondwerkzeugs bei einer zwölften Variante des Betriebsverfahrens,
- Fig. 14: den zeitlichen Verlauf der Prozessparameter Normalkraft, Ultraschallleistung und Ist-Temperatur der Spitze des Bondwerkzeugs bei einer dreizehnten Variante des Betriebsverfahrens.
- Fig. 15: den zeitlichen Verlauf der Prozessparameter Normalkraft, Ultraschallleistung und Ist-Temperatur der Spitze des Bondwerkzeugs bei einer vierzehnten Variante des Betriebsverfahrens,
- Fig. 16: den zeitlichen Verlauf der Prozessparameter Normalkraft, Ultraschallleistung und Ist-Temperatur der Spitze des Bondwerkzeugs bei einer fünfzehnten Variante des Betriebsverfahrens,
- Fig. 17: ein erstes Beispiel für den zeitlichen Verlauf von Normalkraft, Ultraschallleistung und Ist-Temperatur bei drei aufeinander folgenden Bondzyklen und
- Fig. 18: ein zweites Beispiel für den zeitlichen Verlauf von Normalkraft, Ultraschallleistung und Ist-Temperatur bei drei aufeinander folgenden Bondzyklen.

Nachfolgend wird an verschiedenen Verfahrensvarianten beziehungsweise -konzepten beispielhaft die Möglichkeit verdeutlicht, den Verbindungsprozess beim laserunterstützten Ultraschallbonden durch Beeinflussung der Normalkraft, der Ultraschallleistung sowie der Soll- beziehungsweise Ist-Temperatur, auf die eine Spitze des Bondwerkzeugs erwärmt werden soll beziehungsweise erwärmt wird, zu beeinflussen.

Beispielsweise kann das Verfahren beim Ultraschall-Dickdrahtbonden zur Anwendung gelangen. Dabei ist das Bondwerkzeug an einem in einem Bondbereich eines Bondautomaten frei positionierbaren und drehbaren Bondkopf gehalten. Durch das Positionieren des Bondkopfes wird das Bondwerkzeug über einer Kontaktfläche eines Funktionsbauteils, beispielsweise eines elektrischen Leiters auf einer Leiterplatte, eines Chips oder einer Batterie, positioniert. An dem Bondwerkzeug ist dabei stirnseitig an der Spitze eine üblicherweise V-förmige Ausnehmung vorgesehen, in der ein als Verbindungsbauteil dienender Aluminium- oder Kupferdraht eingelegt ist. Das Verbindungsbauteil wird mit einer Normalkraft gegen die Kontaktfläche des Funktionsbauteils angedrückt, indem das Bondwerkzeug abgesenkt wird. Das Bondwerkzeug wird dann über einen Ultraschallgenerator, beispielsweise einen Piezoaktor, zu Ultraschallschwingungen angeregt. Zusätzlich wird die Spitze des Bondwerkzeugs mittels eines von einem Lasergenerator bereitgestellten Laserstrahls erwärmt. Der Laserstrahl trifft hierzu bevorzugt mantelseitig von außen im Bereich der Spitze auf das Bondwerkzeug.

Um innerhalb einer vorgegebenen Zeit möglichst viele elektrisch leitende Verbindungen herstellen zu können, müssen insbesondere beim Ultraschall-Drahtbonden die bewegten Massen möglichst gering sein. Es kann insofern vorgesehen sein, dass der Lasergenerator ortsfest installiert ist und der Laserstrahl durch einen Lichtwellenleiter aus dem Lasergenerator heraus zu dem Bondwerkzeug geführt wird. Ein der Spitze des Bondwerkzeugs zugewandtes freies Ende des Lichtwellenleiters kann dabei beabstandet zum Bondwerkzeug positioniert werden. Hierdurch wird die Übertragung der Ultraschallschwingungen auf den Lichtwellenleiter vermieden. Zudem ist einer Verschmutzung des Lichtwellenleiters durch abgelöste Werkstoffpartikel beim laserunterstützten Ultraschallbonden entgegengewirkt mit der Folge, dass ein guter optischer Wirkungsgrad erreicht ist.

Im Bereich des freien Endes des Lichtwellenleiters ist eben dieser an dem Bondkopf befestigt und mitbewegt. Der Lichtwellenleiter beziehungsweise das freie Ende desselben ist insofern stets in einer definierten Position zum Bondwerkzeug vorgesehen. Der Laserstrahl trifft insofern stets an einer definierten, gleichen Stelle auf das Bondwerkzeug. Beispielsweise kann an dem Bondwerkzeug dort, wo der Laserstrahl auf das Bondwerkzeug trifft, mantelseitig eine Ausnehmung oder Tasche gebildet sein. Im Bereich der Ausnehmung beziehungsweise Tasche kann eine Oberflächengeometrie so gewählt sein, dass der Laserstrahl mehrfach reflektiert wird und mehrfach auf das Bondwerkzeug trifft. Die Absorption des Laserstrahls wird hierdurch verbessert mit der Folge, dass ein größerer Anteil der Laserleistung als Heizleistung zum Erwärmen der Spitze des Bondwerkzeugs zur Verfügung steht. Selbstverständlich ist die vorstehende Darstellung für das Ultraschall-Dickdrahtbonden lediglich exemplarisch. Sinngemäß gelten die gleichen Zusammenhänge für andere Bondverfahren, beispielsweise das Ultraschall-Dünndrahtbonden, das Chipbonden oder das Ribbon-Bonden, in analoger Weise.

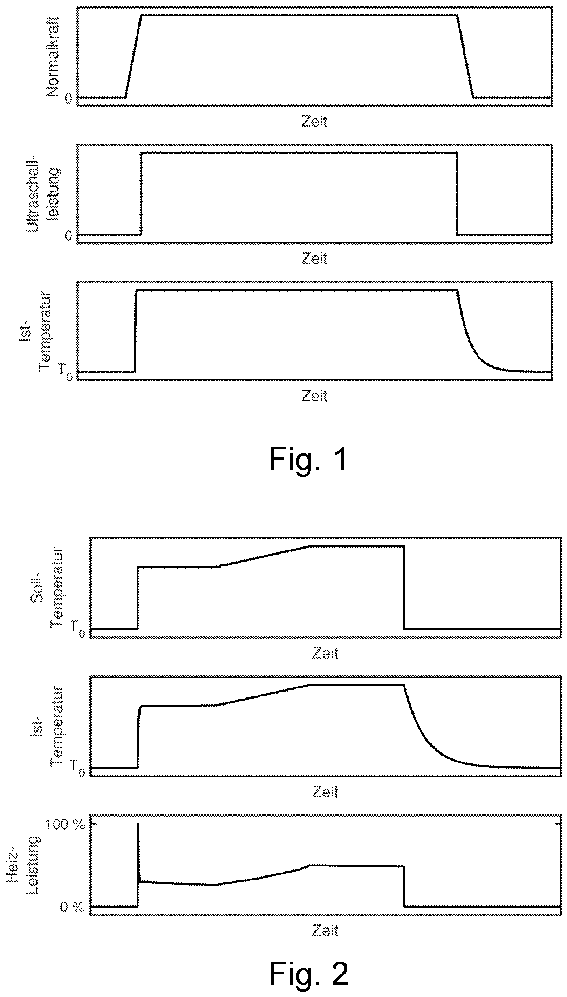

Ein erstes Umsetzungsbeispiel für das Verfahren nach Fig. 1 sieht vor, dass die Prozessparameter Normalkraft, Ultraschallleistung und Ist-Temperatur gleichzeitig auf einen konstanten Prozesswert gebracht werden. Der Prozesswert der Ist-Temperatur liegt dabei oberhalb einer Umgebungs- beziehungsweise Ausgangstemperatur T₀. Die Prozessparameter sind jeweils skaliert beziehungsweise normiert dargestellt.

Die Normalkraft nach Fig. 1 baut sich beim Absenken des Bondwerkzeugs auf, sobald das Verbindungsbauelement gegen die Kontaktfläche des Funktionsbauelements angedrückt wird. Exemplarisch ist in der Darstellung ein linearer Anstieg der Normalkraft gewählt. In der Realität kann die Kraft auch nicht-linear zunehmen.

Sobald die Normalkraft den Soll-Wert erreicht, wird das Bondwerkzeug zu Ultraschallschwingungen angeregt. Entsprechend wird die Ultraschallquelle aktiviert und die Ultraschallleistung wird über die Prozesszeit konstant gehalten. Der Aktivierungszeitpunkt für den Lasergenerator ist so gewählt, dass der Prozesswert der Ist-Temperatur erreicht ist, sobald die Normalkraft ihr Maximum erreicht. Die Ist-Temperatur wird dann im zeitlichen Verlauf konstant gehalten, solange die Normalkraft aufgeprägt ist und das Bondwerkzeug zu Ultraschallschwingungen angeregt wird.

Nach dem Herstellen der elektrisch leitenden Verbindung wird der Ultraschall deaktiviert. Zusätzlich wird das Bondwerkzeug abgehoben, die Normalkraft fällt ab und die Ist-Temperatur sinkt. Exemplarisch ist für den Abfall der Normalkraft und der Ist-Temperatur ein linearer Verlauf beziehungsweise der einer Abklingkurve dargestellt. Auch hier sind diese Verläufe lediglich exemplarisch gewählt. Es kann ein an den Erfordernissen beziehungsweise Besonderheiten des Verbindungsprozesses orientierter anderer Verlauf gewählt werden.

Das Betriebsverfahren nach der ersten Verfahrensvariante kann prozesstechnisch und bezüglich der Steuerung einfach umgesetzt werden, da der Lasergenerator synchron zum Ultraschallgenerator betrieben wird, während die Normalkraft aufgeprägt wird. Vorteilhaft ist diese Variante auch, wenn mittels des Lasers die Spitze des Bondwerkzeugs nur erreicht beziehungsweise erwärmt werden kann, wenn das Verbindungsbauteil gegen das Funktionsbauteil gedrückt wird und die Normalkraft aufgeprägt wird. Zudem ist die thermische Belastung der weiteren Funktionskomponenten des Bondautomaten vergleichsweise gering, da die Werkzeugspitze nur während des Kontakts mit dem Verbindungsbauteil erwärmt wird.

Auf den Zusammenhang zwischen der Soll-Temperatur, der im Bereich der Werkzeugspitze messtechnisch erfassten Ist-Temperatur und der Heizleistung wird nachfolgend mit Bezug auf Fig. 2 eingegangen. Es ist hierbei so, dass die Ist-Temperatur dem durch den Soll-Temperaturverlauf vorgegebenen Sprung auf den Prozesswert oberhalb der Umgebungs- beziehungsweise Ausgangstemperatur T₀ folgt. Sofern dann die Soll-Temperatur über einen gewissen Zeitraum konstant gehalten wird, reduziert sich die Heizleistung beziehungsweise eine Laserleistung insbesondere, da zunehmend weniger Wärme aus der beheizten Bondwerkzeugspitze in den Rest des Bondwerkzeugs abfließt.

Um die Spitze des Bondwerkzeugs innerhalb kurzer Zeit stark zu erwärmen, ist es notwendig, impulsartig eine große Heizleistung und abhängig vom optischen Wirkungsgrad beziehungsweise weiteren Verlustgrößen eine noch größere Laserleistung bereitzustellen. Die Laserleistung ist also um die Verlustleistung größer als die Heizleistung beziehungsweise die Heizleistung ist der Teil der vom Laser zur Verfügung gestellten Laserleistung, mit der die Werkzeugspitze des Bondwerkzeugs erwärmt wird.

Wenn in einer weiteren Prozessphase die Soll-Temperatur exemplarisch linear auf ein höheres Temperaturniveau angehoben wird, steigt die aufzubringende Heizleistung. Sobald die höhere Soll-Temperatur erreicht ist, bleibt auch die Heizleistung wieder näherungsweise konstant beziehungsweise sinkt geringfügig. Die Ist-Temperatur ist dabei jeweils messtechnisch erfasst. Sie dient als Regelgröße für den Lasergenerator.

Sofern die Soll-Temperatur nach dem Herstellen der Bondverbindung schlagartig abfällt, kann die Laserleistung ebenfalls zurückgefahren beziehungsweise der Lasergenerator deaktiviert werden. Die Ist-Temperatur wird im Falle der unkontrollierten Abkühlung jedoch nicht schlagartig abfallen, sondern entlang einer Abklingkurve reduziert werden.

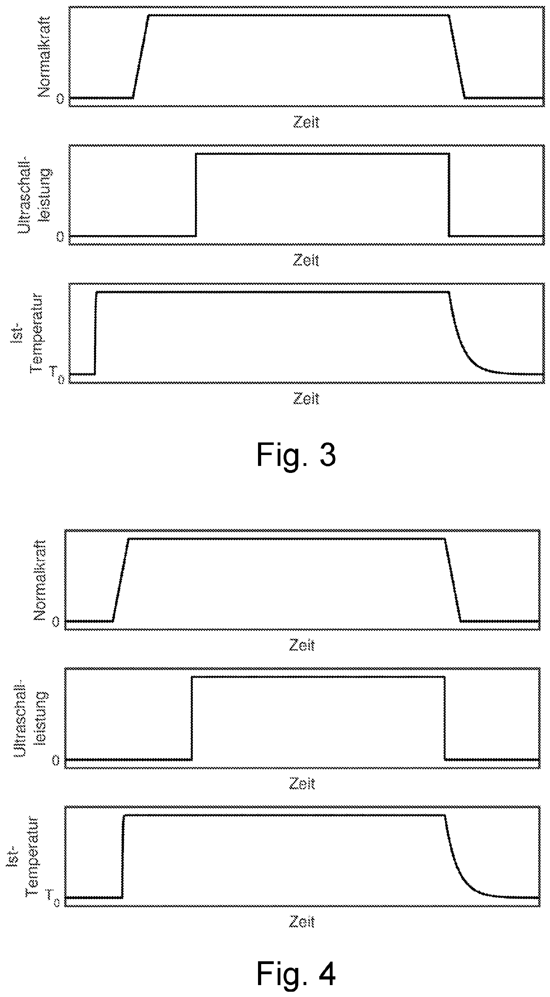

Fig. 3 zeigt ein zweites Verfahrenskonzept in Bezug auf den zeitlichen Verlauf der Normalkraft, der Ultraschallleistung und der Ist-Temperatur. Das Bondwerkzeug wird dabei bereits vor dem Aufbringen der Normalkraft erwärmt. Nach dem Aufprägen der Normalkraft wird die Temperatur beibehalten mit der Folge, dass über die Spitze des Bondwerkzeugs das Verbindungsbauteil und das Funktionsbauteil erwärmt werden.

Dabei wird in der Darstellung von einem idealen Regler ausgegangen, der den Wärmeabfluss ideal kompensiert. In der Praxis mag es zu Abweichungen kommen, dass die Ist-Temperatur temporär stärker schwankt.

Der Ultraschall wird nachfolgend aktiviert, wenn die zu verbindenden Bauteile eine erhöhte Temperatur erreicht haben. Die Temperatur wird dann nach dem Anheben des Bondwerkzeugs wieder reduziert. Erfindungsgemäß ist vorgesehen, dass das Bondwerkzeug während der Positionierung des Bondkopfs erwärmt wird. Insgesamt kann es hierdurch gelingen, die Prozesszeiten deutlich zu reduzieren. Zudem kann der Verschleiß des Bondwerkzeugs reduziert werden, wenn der Ultraschall erst aktiviert wird, nachdem die Verbindungspartner erwärmt wurden und somit leichter verformt und verbunden werden können.

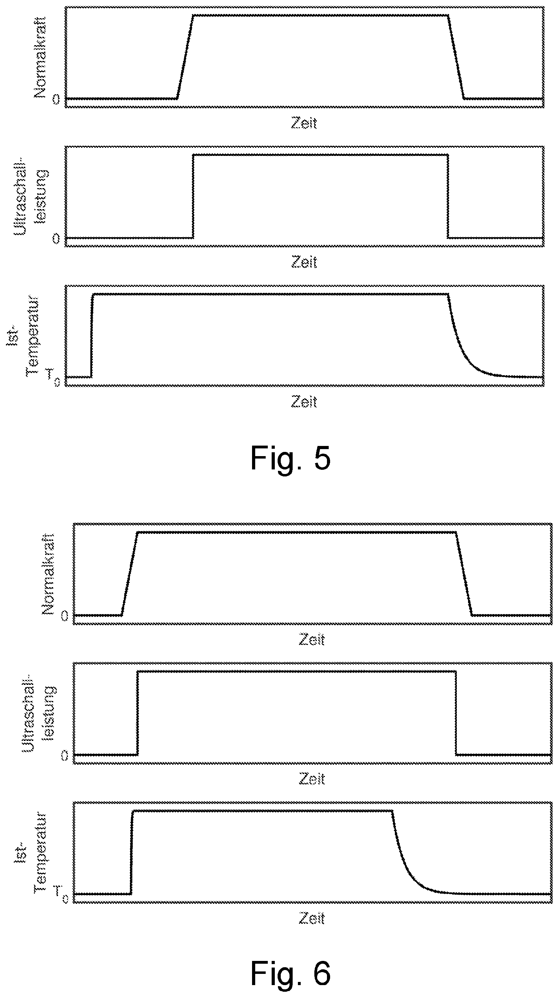

Ähnliche Verfahrensverläufe sind in den Fig. 4 und 5 dargestellt. Nach dem Verfahrensbeispiel gemäß Fig. 4 wird das Bondwerkzeug zu Ultraschallschwingungen angeregt, nachdem die Normalkraft aufgeprägt wurde und das Bondwerkzeug über einen vorgegebenen Zeitraum erwärmt wurde. Insofern wird auch hier der Verschleiß des Bondwerkzeugs reduziert. Auf eine Erwärmung des Bondwerkzeugs vor dem Aufbringen der Normalkraft wird hier verzichtet.

In der Verfahrensvariante nach Fig. 5 wird eine weitere Reduzierung der Prozesszeit dadurch erreicht, dass die Normalkraft und die Ultraschallleistung im Wesentlichen gleichzeitig bereitgestellt sind, wohingegen das Bondwerkzeug bereits frühzeitig und insbesondere während der Positionierung des Bondkopfes auf die höhere Prozesstemperatur erwärmt wird.

Nach einer fünften Verfahrensvariante gemäß Fig. 6 ist vorgesehen, die Temperatur des Bondwerkzeugs zu reduzieren, bevor die Ultraschallleistung deaktiviert und das Bondwerkzeug abgehoben wird. Dieses Vorgehen kann insbesondere angezeigt sein, um eine unzulässige Erwärmung der Kontaktfläche und/oder eine Beschädigung des Funktionsbauteils zu verhindern. Beispielsweise kann in Bezug auf die Temperatur des Funktionsbauteils eine Kontrollmessung beziehungsweise Überwachung realisiert sein und der Lasergenerator deaktiviert werden, sobald im Bereich der Kontaktfläche beziehungsweise des Funktionsbauteils eine kritische Temperatur erreicht ist.

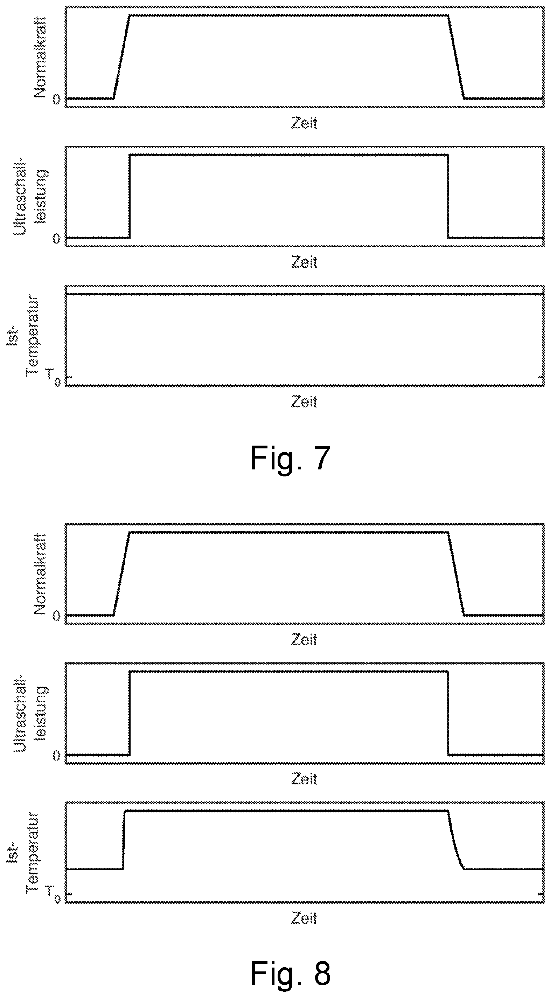

Nach einer sechsten Ausführungsvariante des erfindungsgemäßen Herstellverfahrens gemäß Fig. 7 wird die Ist-Temperatur durchgängig, das heißt über die Herstellung mehrerer elektrisch leitender Verbindungen hinweg, auf einem konstant hohen Prozesswert gehalten. Das an die Spitze des Bondwerkzeugs angelegte Verbindungsbauteil wird insofern ab dem Zeitpunkt des Kontaktes mit dem Bondwerkzeug erwärmt. Nach dem Aufprägen der Normalkraft steigt durch den aufgrund der Normalkraft innigen Kontakt die Erwärmung des Verbindungsbauteils und es erwärmt sich auch das Funktionsbauteil. Zudem wird das Bondwerkzeug zu Ultraschallschwingungen angeregt. Vorteilhaft kann der Bondprozess durch die vorgeschlagene Ausgestaltung des erfindungsgemäßen Herstellverfahrens weiter beschleunigt werden, da eine separat ausgebildete Erwärmungsphase entfällt und konstante thermische Bedingungen vorherrschen, welche sich positiv auswirken auf die Beherrschbarkeit des Bondprozesses.

Eine Modifikation des vorstehend diskutierten Verbindungsverfahrens ist in Fig. 8 gezeigt. Hier ist es so, dass die Temperatur stets oberhalb der Umgebungsbeziehungsweise Ausgangstemperatur gehalten wird. Gleichwohl wird während der Herstellung der Verbindung die Temperatur angehoben.

Vorteilhaft kann der Prozess aufgrund des stets vergleichsweise hohen Temperaturniveaus beschleunigt werden. Zudem kann gegenüber der sechsten Verfahrensvariante die Heizenergie beziehungsweise die hiermit korrelierte Laserenergie reduziert werden, wenn die Ist-Temperatur zwischen dem Herstellen von zwei Verbindungen, das heißt beispielsweise beim Neupositionieren des Bondkopfs, absinken darf. Hierdurch sinkt die thermische Belastung der Funktionskomponenten des Bondautomaten und des Verbindungsbauteils im Vergleich zur sechsten Ausführungsvariante des erfindungsgemäßen Verfahrens nach Fig. 7.

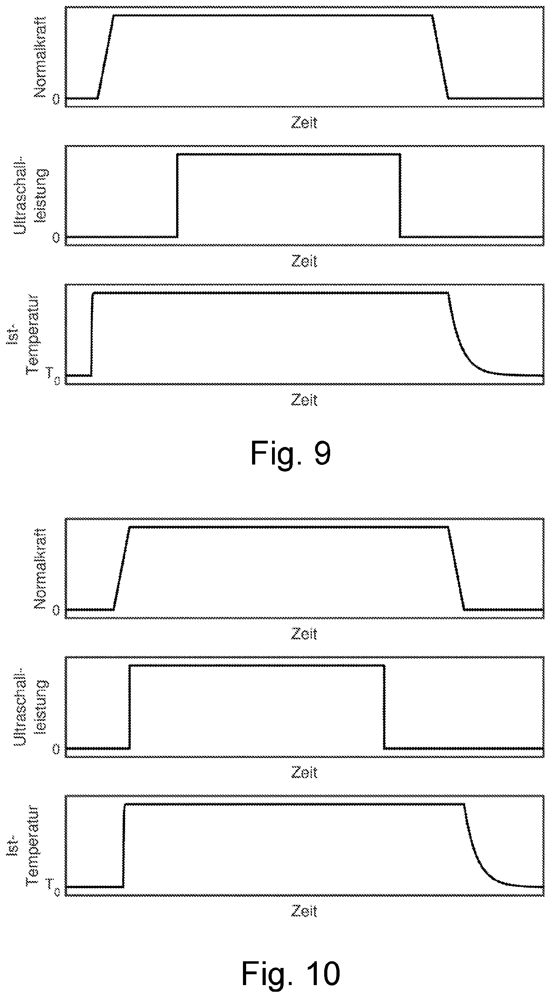

Nach einer achten Verfahrensvariante gemäß der Erfindung gemäß Fig. 9 sowie einer neunten Verfahrensvariante gemäß Fig. 10 wird über den Laserstrahl weiter Wärmeenergie in die Verbindung eingebracht, nachdem der Ultraschall bereits abgestellt worden ist. Die Erwärmung wird erst nach dem Abheben des Bondwerkzeugs beendet. Die zusätzliche, nachträgliche Wärmeenergiezufuhr begünstigt die dauerhafte und homogene Verbindung der Kontaktpartner.

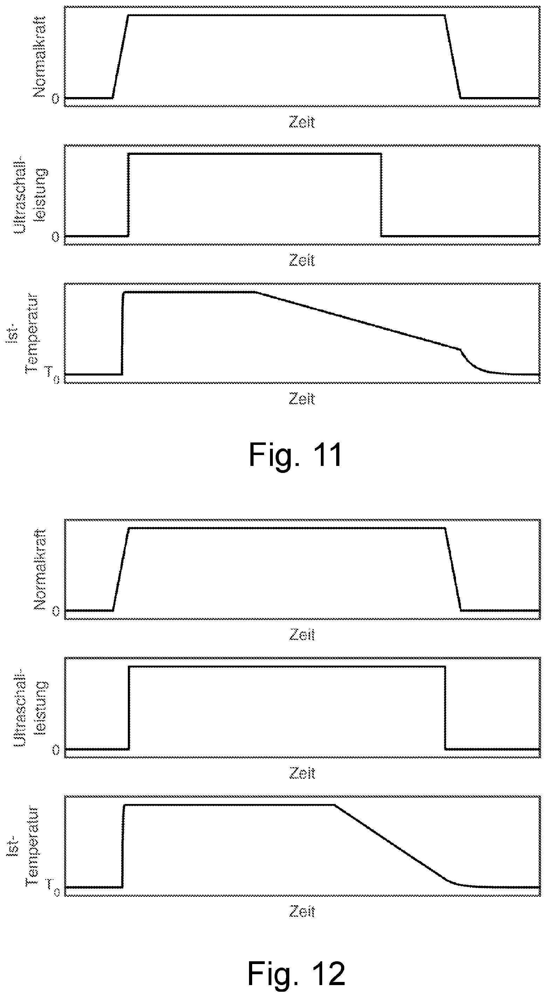

Exemplarisch zeigt Fig. 11 eine zehnte Verfahrensvariante, bei der die Temperatur von einer vorgegebenen Soll-Temperatur aus noch während des Herstellungsprozesses abgesenkt wird. Das Absenken der Temperatur kann beispielsweise vorgesehen werden, um eine unzulässige beziehungsweise schädigende Erwärmung des Verbindungsbauteils beziehungsweise des Funktionsbauteils zu vermeiden.

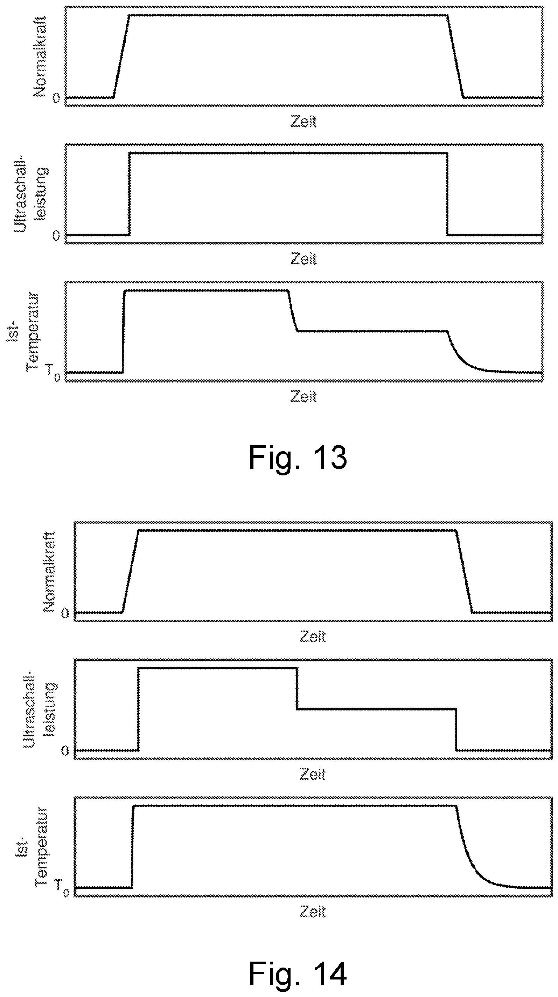

Eine elfte Verfahrensvariante nach Fig. 12 sowie eine zwölfte Verfahrensvariante nach Fig. 13 zeigen einen im laufenden Bondprozess sinkenden Verlauf für die Ist-Temperatur. Die Ist-Temperatur kann beispielsweise linear, gestuft oder anderweitig stetig abgesenkt werden. Insbesondere kann es auch hierdurch gelingen, eine Beschädigung des Verbindungsbauteils beziehungsweise des Funktionsbauteils zu vermeiden. Um die Ist-Temperatur zu senken, kann der Lasergenerator beispielsweise deaktiviert und/oder gepulst und/oder mit einer reduzierten Laserleistung betrieben werden.

Nach einer dreizehnten Verfahrensvariante gemäß Fig. 14 wird die Ultraschallleistung beim Herstellen der Verbindung im laufenden Prozess reduziert. Exemplarisch ist eine gestufte Reduzierung der Ultraschallleistung dargestellt. Beispielsweise kann vorgesehen sein, dass die Ultraschallleistung nicht sprungartig, sondern rampenförmig beziehungsweise stetig reduziert wird.

Vorteilhaft kann nach der dreizehnten Verfahrensvariante des Betriebsverfahrens die Ultraschallleistung zunächst vergleichsweise hoch sein und abgesenkt werden, wenn die Kontaktflächen gereinigt sind und die erste Verbindungsbildung erfolgt ist. Die Reduzierung der Ultraschallleistung dient insofern der Weiterbildung der bereits initial ausgebildeten Verbindung und verhindert, dass zu große Ultraschallschwingungen die Verbindung wieder beschädigen.

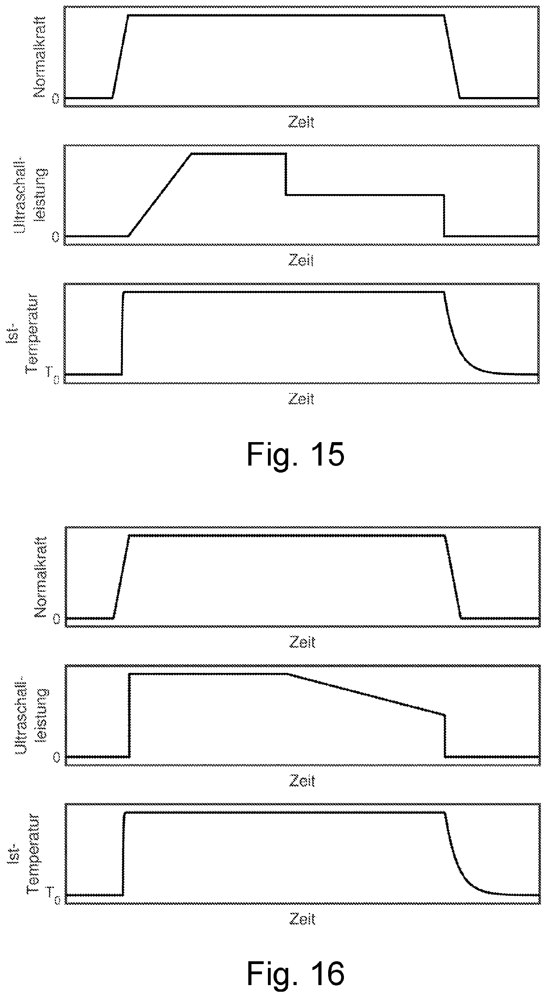

Fig. 15 zeigt eine Modifikation des Verfahrens nach Fig. 14. Insbesondere ist hier vorgesehen, die Ultraschallleistung nach dem Aufbringen der Normalkraft langsam und exemplarisch rampenartig zu steigern. In analoger Weise kann - wie in Fig. 16 dargestellt - die Ultraschallleistung rampenförmig beziehungsweise kontinuierlich reduziert werden.

Vorteilhaft arbeitet die (Resonanz-) Frequenzregelung des Ultraschallgenerators besonders stabil, wenn die Ultraschallleistung beziehungsweise die Amplitude der Ultraschallschwingung langsam erhöht wird. Zudem wird beim Betrieb des Ultraschallgenerators üblicherweise die elektrische Spannung vorgegeben. Wenn die Schwingungsamplitude sprungartig erhöht wird, kann es zum Überschwingen des Stroms und der Ultraschallleistung kommen. Dann sind die Schwingungsamplitude und die Ultraschallleistung kurzfristig größer als vorgesehen und es kann insbesondere bei empfindlichen Substraten beziehungsweise Funktionsbauteilen zu Beschädigungen kommen.

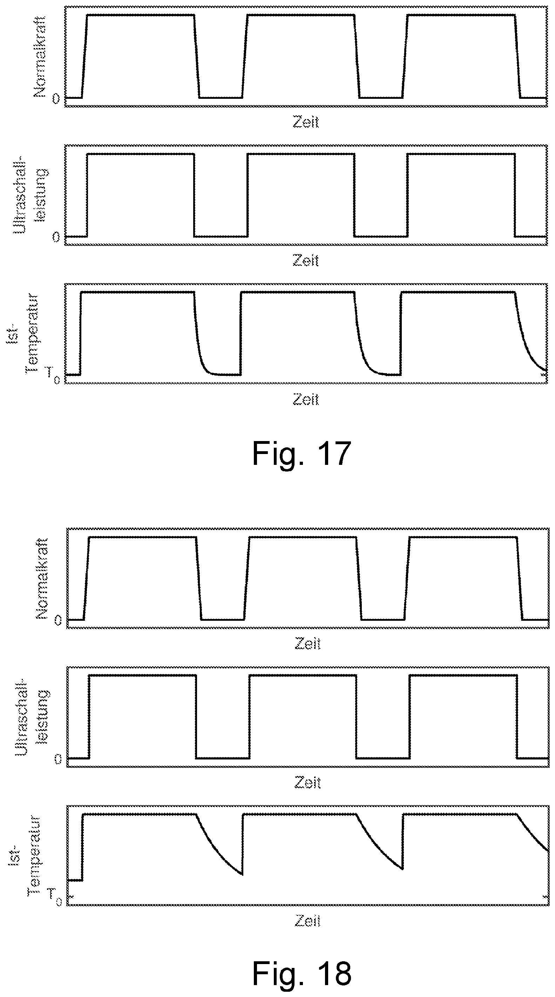

In den Fig. 17 und 18 sind nun jeweils die Normalkraft, die Ultraschallleistung und die Ist-Temperatur für drei aufeinanderfolgende Bondzyklen dargestellt, wobei je Bondzyklus eine elektrisch leitende Verbindung hergestellt wird. Gemäß Fig. 17 ist der Bondprozess so realisiert, dass die Ist-Temperatur beim Bonden auf ein hohes erstes Temperaturniveau angehoben wird und dass zwischen zwei Bondzyklen die Ist-Temperatur auf die Ausgangstemperatur T₀ sinkt. Demgegenüber ist nach Fig. 18 der Bondprozess so gestaltet, dass zwischen zwei Bonds die Ist-Temperatur nicht auf die Ausgangstemperatur T₀ absinkt. Beispielsweise ist die Zykluszeit so gering, dass sich die Ausgangstemperatur T₀ bei einer freien Abkühlung nicht einstellen kann.

## Patentansprüche

1. Verfahren zum Herstellen einer elektrisch leitenden Verbindung zwischen einer Kontaktfläche eines Funktionsbauteils und einem Verbindungsbauteil umfassend die folgenden Verfahrensschritte:
- das Verbindungsbauteil wird von einem Bondwerkzeug mit einer Normalkraft gegen die Kontaktfläche des Funktionsbauteils angedrückt;
- das Bondwerkzeug und das daran angelegte Verbindungsbauteil werden zu Ultraschallschwingungen angeregt;
- von einem Lasergenerator wird ein Laserstrahl bereitgestellt;
- der Laserstrahl wird auf das Bondwerkzeug und bevorzugt auf eine Spitze des Bondwerkzeugs gerichtet und erwärmt die Spitze des Bondwerkzeugs;
- eine Ist-Temperatur der Spitze des Bondwerkzeugs wird berührungslos gemessen;
- der Lasergenerator wird intermittierend und/oder mit einer einstellbaren Laserleistung so betrieben, dass sich an der Spitze des Bondwerkzeugs eine vorgegebene Soll-Temperatur einstellt;
**dadurch gekennzeichnet, dass**
der Lasergenerator aktiviert wird zur Bereitstellung des Laserstrahls, bevor das Bondwerkzeug mit der Normalkraft beaufschlagt und das Verbindungsbauteil gegen die Kontaktfläche des Funktionsbauteils angedrückt wird, wobei die Spitze des Bondwerkzeugs erwärmt wird, während das Bondwerkzeug über der Kontaktfläche des Funktionsbauteils positioniert wird, und wobei der Lasergenerator fortbetrieben wird, nachdem die Anregung des Bondwerkzeugs zu Ultraschallschwingungen beendet wird.

2. Verfahren nach Anspruch 1, **dadurch gekennzeichnet, dass** die Laserleistung des Lasergenerators so gewählt ist, dass die Ist-Temperatur der Spitze des Bondwerkzeugs nach dem Herstellen einer ersten elektrischen Verbindung und vor dem Herstellen einer zweiten elektrischen Verbindung dauerhaft oberhalb einer Umgebungs- und/oder Ausgangstemperatur T₀ liegt.

3. Verfahren nach Anspruch 1 oder 2, **dadurch gekennzeichnet, dass** die Ist-Temperatur geregelt wird mit der Soll-Temperatur als Führungsgröße.

4. Verfahren nach einem der Ansprüche 1 bis 3, **dadurch gekennzeichnet, dass** der Lasergenerator aktiviert wird zur Bereitstellung des Laserstrahls, bevor das Bondwerkzeug zu Ultraschallschwingungen angeregt wird.

5. Verfahren nach einem der Ansprüche 1 bis 4, **dadurch gekennzeichnet, dass** die Ist-Temperatur der Spitze des Bondwerkzeugs während der Herstellung der Verbindung durch jedenfalls zeitweises Deaktivieren des Lasergenerators und/oder Absenken der Laserleistung des Lasergenerators und/oder einen gepulsten Betrieb des Lasergenerators von einem hohen ersten Temperaturniveau auf ein niedrigeres zweites Temperaturniveau abgesenkt wird.

6. Verfahren nach einem der Ansprüche 1 bis 5, **dadurch gekennzeichnet, dass** die Ist-Temperatur der Spitze des Bondwerkzeugs kontinuierlich und/oder wiederholt in festen oder variablen Zeitabständen bestimmt wird.

7. Verfahren nach einem der Ansprüche 1 bis 6, **dadurch gekennzeichnet, dass** die Soll-Temperatur sich im Zeitverlauf ändert.

8. Verfahren nach einem der Ansprüche 1 bis 7, **dadurch gekennzeichnet, dass** der Laserstrahl über einen Lichtwellenleiter aus dem Lasergenerator herausgeführt und zu der Spitze des Bondwerkzeugs geführt wird.

9. Verfahren nach Anspruch 8, **dadurch gekennzeichnet, dass** ein der Spitze des Bondwerkzeugs zugewandtes freies Ende des Lichtwellenleiters in einem Abstand zu dem Bondwerkzeug positioniert und/oder gehalten wird.

10. Verfahren nach einem der Ansprüche 1 bis 9, **dadurch gekennzeichnet, dass** der Laserstrahl mantelseitig von außen auf das Bondwerkzeug trifft.

## Claims

1. A method for producing an electrically conductive connection between a contact surface of a functional component and a connection component, comprising the following method steps:
- pressing the connection component, by a bonding tool, with a normal force against the contact surface of the functional component;
- exciting the bonding tool and the connection component placed thereon to ultrasonic oscillations;
- providing a laser beam by a laser generator;
- directing the laser beam onto the bonding tool and preferably onto a tip of the bonding tool and heating the tip of the bonding tool;
- measuring an actual temperature of the tip of the bonding tool in a contactless manner;
- operating the laser generator intermittently and/or with an adjustable laser power in such a way that a predetermined target temperature is adjusted at the tip of the bonding tool;
**characterized in that**
the laser generator is activated to provide the laser beam before the bonding tool is subjected to the normal force and the connection component is pressed against the contact surface of the functional component, the tip of the bonding tool being heated while the bonding tool is positioned over the contact surface of the functional component, and the laser generator continuing to operate after the excitation of the bonding tool to ultrasonic oscillations has been ended.

2. The method according to claim 1, **characterized in that** the laser power of the laser generator is selected such that the actual temperature of the tip of the bonding tool is permanently above an ambient temperature and/or initial temperature T₀ after the production of a first electrical connection and before the production of a second electrical connection.

3. The method according to claim 1 or 2, **characterized in that** the actual temperature is regulated with the target temperature as a command variable.

4. The method according to any of claims 1 to 3, **characterized in that** the laser generator is activated to provide the laser beam before the bonding tool is excited to ultrasonic oscillations.

5. The method according to any of claims 1 to 4, **characterized in that** the actual temperature of the tip of the bonding tool is lowered from a high first temperature level to a lower second temperature level during the production of the connection by at least temporarily deactivating the laser generator and/or lowering the laser power of the laser generator and/or a pulsed operation of the laser generator.

6. The method according to any of claims 1 to 5, **characterized in that** the actual temperature of the tip of the bonding tool is determined continuously and/or repeatedly at fixed or variable time intervals.

7. The method according to any of claims 1 to 6, **characterized in that** the target temperature changes in the time course.

8. The method according to any of claims 1 to 7, **characterized in that** the laser beam is guided out of the laser generator via an optical waveguide and guided to the tip of the bonding tool.

9. The method according to claim 8, **characterized in that** a free end of the optical waveguide facing the tip of the bonding tool is positioned and/or held at a distance from the bonding tool.

10. The method according to any of claims 1 to 9, **characterized in that** the laser beam impinges on the bonding tool on the lateral surface from the outside.

## Revendications

1. Procédé de fabrication d'une connexion électroconductrice entre une surface de contact d'un composant fonctionnel et un élément de liaison comprenant les étapes de procédé suivantes :
- l'élément de liaison est pressé par un outil de liaison avec une force normale contre la surface de contact du composant fonctionnel;
- l'outil de liaison et l'élément de liaison appliqué contre celui-ci sont excités pour générer des vibrations ultrasonores;
- un rayon laser est mis à disposition par un générateur laser;
- le rayon laser est dirigé vers l'outil de liaison et de préférence vers une pointe de l'outil de liaison et chauffe la pointe de l'outil de liaison;
- une température effective de la pointe de l'outil de liaison est mesurée sans contact;
- le générateur laser est en service intermittent et/ou avec une puissance laser réglable de façon à obtenir à la pointe de l'outil de liaison une température de consigne prédéfinie;
**caractérisé en ce que**
le générateur laser est activé pour la mise à disposition du rayon laser avant d'appliquer la force normale à l'outil de liaison et de presser l'élément de liaison contre la surface de contact du composant fonctionnel, la pointe de l'outil de liaison étant chauffée pendant que l'outil de liaison est positionné au-dessus de la surface de contact du composant fonctionnel et le générateur laser restant en service après l'arrêt de l'excitation ultrasonore de l'outil de liaison.

2. Procédé selon la revendication 1, **caractérisé en ce que** la puissance laser du générateur laser est choisie de façon à ce que, après la réalisation d'une première connexion électrique et avant la réalisation d'une deuxième connexion électrique, la température effective de la pointe de l'outil de liaison reste durablement supérieure à une température ambiante et/ou à une température de départ T₀.

3. Procédé selon la revendication 1 ou 2, **caractérisé en ce que** la température effective est réglée en prenant la température de consigne comme grandeur de référence.

4. Procédé selon l'une des revendications 1 à 3, **caractérisé en ce que** le générateur laser est activé pour la mise à disposition du rayon laser avant l'excitation ultrasonore de l'outil de liaison.

5. Procédé selon l'une des revendications 1 à 4, **caractérisé en ce que**, pendant la réalisation de la connexion, la température effective de la pointe de l'outil de liaison passe d'un premier niveau de température élevé à un second niveau de température moindre par suite d'une désactivation en tout cas temporaire du générateur laser et/ou par une baisse de la puissance du générateur laser et/ou par un fonctionnement du générateur laser en mode pulsé.

6. Procédé selon l'une des revendications 1 à 5, **caractérisé en ce que** la température effective de la pointe de l'outil de liaison est déterminée continuellement et/ou à plusieurs reprises à des intervalles de temps fixes ou variables.

7. Procédé selon l'une des revendications 1 à 6, **caractérisé en ce que** la température de consigne varie au cours du temps.

8. Procédé selon l'une des revendications 1 à 7, **caractérisé en ce que** le rayon laser est conduit du générateur laser vers la pointe de l'outil de liaison par un guide d'ondes optiques.

9. Procédé selon la revendication 8, **caractérisé en ce qu'**une extrémité libre du guide d'ondes optiques opposée à la pointe de l'outil de liaison est positionnée et/ou maintenue à une certaine distance de l'outil de liaison.

10. Procédé selon l'une des revendications 1 à 9, **caractérisé en ce que** le rayon laser atteint l'outil de liaison de l'extérieur par le côté latéral.
